# EUROPEAN PATENT SPECIFICATION

(11) **EP 4 253 921 B1**
(45) Date of publication and mention of the grant of the patent: **07.08.2024**
(21) Application number: 22305418.0
(22) Date of filing: 31.03.2022
(51) Int. Cl.: G01G 3/14, G01L 1/22

(54) **ELONGATED BENDING SHEET FOR DETERMINING A MECHANICAL VEHICLE LOAD AND A RESPECTIVE VEHICLE**
LÄNGLICHES BIEGEBLECH ZUM BESTIMMEN EINER MECHANISCHEN FAHRZEUGBELASTUNG UND EIN ENTSPRECHENDES FAHRZEUG
TÔLE DE FLEXION ALLONGÉE POUR DÉTERMINER UNE CHARGE MÉCANIQUE DE VÉHICULE ET UN VÉHICULE RESPECTIF

(43) Date of publication of application: 04.10.2023
(73) Proprietor: Bollhoff Otalu S.A., 73490 La Ravoire (FR); Böllhoff Verbindungstechnik GmbH, 33649 Bielefeld (DE)
(72) Inventor: Draht, Torsten, 33758 Schloß Holte-Stukenbrock (DE); Möhring, Jörg, 33106 Paderborn (DE); Jambut, Jean-François, 73190 Challes les eaux (FR); Romala, Julien, 73000 Chambéry (FR)
(74) Representative: HWP Intellectual Property

(56) References cited:
- EP-A1- 3 894 814
- US-A- 3 743 041
- US-A1- 2007 006 669

## Description

### 1. Field of the invention

The present invention is related to an elongated bending sheet for determining a mechanical vehicle load, in particular a remaining vehicle load capacity, a respective vehicle, a method for determining a mechanical vehicle load, in particular a remaining vehicle load capacity as well as methods for manufacturing a respective elongated bending sheet.

### 2. Background of the invention

Several arrangements are known in the prior art for determining a mechanical vehicle load.

For example, an arrangement for determining the deflection of a component, and a method for producing such an arrangement, are described in WO 2020/120229 A1. The arrangement has a measuring block, which has a first planar portion, a second planar portion, and a measuring portion arranged in a first horizontal direction between the first planar portion and the second planar portion, and which is curved in a vertical direction. The vertical direction extends perpendicularly to the first horizontal direction. A first carrier, which has a first lower surface, which is configured to be arranged on the component, and an upper surface, which is arranged parallel to the lower surface and at a distance in the vertical direction from the lower surface is also provided. Additionally, a second carrier is provided having a lower surface, which is configured to be arranged on the component, and an upper surface, which is arranged parallel to the lower surface and at a distance in the vertical direction from the lower surface. The first planar portion is arranged on the upper surface of the first carrier, and the second planar portion is arranged on the upper surface of the second carrier.

Additionally, US 3,743,041 describes a transducer beam assembly. For use on a vehicle which includes an axle and a spring, a respective load measuring transducer assembly comprises first and second support members secured to the spring and the axle of the vehicle, respectively, in vertically spaced apart relationship, and an elongated beam having opposite ends disposed horizontally therebetween. A first fulcrum means is provided for pivotably, compressively supporting the beam at the ends of thereof in spaced apart relationship to the first member. A second fulcrum means for applying a flexing force to the beam in proportion to the load on the axle pivotably and compressively supports the beam inwardly of the ends thereof in spaced apart relationship to the second support member. First and second coupling means pivotably couple the ends of the beam to the first member and the beam to the second member adjacent to the second fulcrum means, respectively. A strain measuring means for measuring the flexing strain of the beam is mounted thereor

Documents US 2007/006669 A1 and EP 3 894 814 A1 disclose prior art arrangements for determining the deflection of a component.

None of the prior art documents discloses at least that the bearings of the second pair have a second distance (d2 ) along the central longitudinal axis (Lc ) with respect to each other which is smaller than the first distance (d1), are arranged on a second side of the elongated bending sheet opposite to the first side and generate a second supporting plane different from the first supporting plane, and that the elongated bending sheet is arrangeable between a first and a second component which are movable with respect to each other such that the first pair of bearings abuts at the first component (1) and the second pair of bearings abuts at the second component so that a relative movement of the first and second component with respect to each other causes a detectable deformation of the bending sheet.

In view of the above cited prior art documents, it is a problem of the present invention to provide an improved device for measuring the mechanical vehicle load.

### 3. Summary of the invention

The above problem is solved by a first alternative of an elongated bending sheet according to independent claim 1, a second alternative of an elongated bending sheet according to independent claim 2, a vehicle comprising an inventive elongated bending sheet or an arrangement according to independent claim 15, a method for determining a mechanical vehicle load according to independent claim 19, a method for manufacturing the first alternative of the elongated bending sheet according to independent claim 20 as well as a method for manufacturing the second alternative of the elongated bending sheet according to independent claim 21. Further preferred embodiments and developments result from the following description, the drawings as well as the appending claims.

In a first inventive alternative, an elongated bending sheet for determining a mechanical vehicle load, in particular a remaining vehicle load capacity, has a greater extension along a central longitudinal axis compared to a central transverse axis extending transverse to the central longitudinal axis, wherein the central longitudinal axis and the central transverse axis generate a central plane, wherein the elongated bending sheet is formed in one piece with a first and a second integral pair of bearings, the bearings of the first pair have a first distance along the central longitudinal axis with respect to each other, are arranged on a first side of the elongated bending sheet and generate a first supporting plane, the bearings of the second pair have a second distance along the central longitudinal axis with respect to each other which is smaller than the first distance, are arranged on a second side of the elongated bending sheet opposite to the first side and generate a second supporting plane different from the first supporting plane, and the elongated bending sheet is arrangeable between a first and a second component which are movable with respect to each other such that the first pair of bearings abuts at the first component and the second pair of bearings abuts at the second component so that a relative movement of the first and second component with respect to each other causes a detectable deformation of the bending sheet.

For an easier understanding of the inventive elongated bending sheet, the function thereof is described during use in a vehicle such as a car or truck. Such a vehicle usually has the main components vehicle body and running gear. Running gear denotes in this regard the bearing parts of a vehicle having the function to carry the drive, the vehicle body, and any additional load, also referred to as the payload. At the running gear, usually the wheel suspension, all essential drive elements such as gear and engine and optionally the vehicle body or transport containers are fastened. A main effect of the running gear is to stabilize the vehicle against forces acting on the vehicle. In case of a vehicle having a self-bearing vehicle body, the running gear corresponds to the bottom group. If the vehicle is an aircraft, the running gear may also be denoted as landing gear. As a result of the foregoing, the term vehicle body denotes the body or construction of a vehicle on a running gear. Accordingly, and although a car or truck is used for explaining the first alternative of an inventive elongated bending sheet, the respective bending sheet may be used in any vehicle, preferably any land vehicle or aircraft, having a vehicle body and a running gear.

Further, and with respect to the exemplary car or truck, a connection point between vehicle body and running gear is the connection between a suspension strut bearing seat being part of the vehicle body and a suspension strut being part of the running gear. A respective suspension strut may be a MacPherson strut or a spring-damper-unit. The MacPherson strut is a type of suspension system that uses the top of a telescopic damper as the upper steering pivot and is widely used in the front suspension of modern vehicles. A spring-damper-unit, on the other hand, is often used in the rear suspension of modern vehicles. In both cases, a top mount of the respective suspension strut is often fastened with three bolts to the suspension strut bearing seat of the vehicle body.

The inventive first alternative of the elongated bending sheet is mounted precisely to such a connection point between the vehicle body and the running gear, in particular between the suspension strut bearing seat and the suspension strut top mount. Due to the elongated form of the bending sheet, it has the greater extension along the central longitudinal axis compared to the central transverse axis extending transverse thereto. The central longitudinal axis and the central transverse axis generate the central plane. Consequently, the central longitudinal axis and the central transverse axis have a point of intersection, which may also be denoted as center, for example geometric center, of the elongated bending sheet.

The first pair of bearings abuts at the first component, i.e., at the suspension strut bearing seat being part of the vehicle body, and the second pair of bearings abuts at the second component, i.e., the suspension strut being part of the running gear. This arrangement results as the bearings of the first pair have the first distance along the central longitudinal axis with respect to each other which is larger than the second distance of the bearings of the second pair. For causing a deformation in the elongated bending sheet, the first pair of bearings is arranged at the first side of the bending sheet and the second pair of bearings is arranged at the opposite second side of the bending sheet. As a result, the elongated bending sheet has two outer bearings and to inner bearings arranged on opposite sides. A force acting on the two outer bearings or a force acting on the two inner bearings generates, thus, a deformation of the elongated bending sheet, which can be measured.

Concerning the arrangement of the first and second pair of bearings on opposite sides of the elongated bending sheet, preferably the central plane is arranged between the first supporting plane generated by the first pair of bearings and the second supporting plane generated by the second pair of bearings. Furthermore, it is especially preferred that all three planes, i.e., the central plane, the first supporting plane and the second supporting plane, extend parallel to each other. This will be discussed in greater detail with respect to the preferred embodiments.

An arranging, for example clamping, of the elongated bending sheet between the first and the second component, i.e., between the suspension strut bearing seat and the suspension strut, is performed such that a longitudinal axis of the suspension strut is preferably arranged at least approximately perpendicular to the central plane of the elongated bending sheet. A deviation from a completely perpendicular arrangement is allowable but is preferably less than a spherical angle of 30°, preferably 20° and more preferably 10° with respect to an axis perpendicular to the central plane.

Assuming a manufactured vehicle in a standing and unladen condition, the distance between the first component, i.e., the suspension strut bearing seat or vehicle body, and the second component, i.e., the suspension strut or running gear, defines an initial condition. This initial condition corresponds to a maximum vehicle load capacity or additionally load of 0 kg.

Adding now a load to the vehicle causes a movement between the first and the second component and decreases the remaining vehicle load capacity. As the elongated bending sheet is arranged, for example by clamping or the like, between the first and the second component, such a movement causes a deformation of the elongated bending sheet. For measuring such a deformation, a sensor such as a strain gauge can be used. Depending on the degree of deformation, a conclusion concerning the added weight and, thus, the added mechanical load as well as the remaining vehicle load capacity is possible.

This applies analogously to a load acting on the vehicle during driving, for example caused by a bumper or the like. Such a relative movement of the two components with respect to each other causes in turn also a deformation of the bending sheet which can be measured.

The special technical advantage of the inventive elongated bending sheet is that the elongated bending sheet is formed in one piece and includes inherently the first and the second pair of bearings. Consequently, the elongated bending sheet is formed with the first and the second integral pair of bearings. This construction facilitates the manufacturing of the elongated bending sheet as only one piece must be produced. Consequently, also the assembly thereof in a respective vehicle is facilitated. Due to the specific arrangement in the vehicle, a reliable detection of additional load as well as of the remaining vehicle load capacity can be performed.

In a second inventive alternative, an elongated bending sheet for determining a mechanical vehicle load, in particular a remaining vehicle load capacity, has a larger extension along a central longitudinal axis compared to a central transverse axis extending transverse to the central longitudinal axis, wherein the central longitudinal axis and the central transverse axis generate a central plane, wherein the elongated bending sheet is formed with a first and a second pair of bearings, the bearings of the first pair are formed by two torus sections of a first torus with a first diameter having a first distance along the central longitudinal axis with respect to each other, are arranged on a first side of the elongated bending sheet and generate a first supporting plane, and the bearings of the second pair are formed by two torus sections of a second torus with a second diameter having a second distance along the central longitudinal axis with respect to each other which is smaller than the first distance, are arranged on a second side of the elongated bending sheet opposite to the first side and generate a second supporting plane different from the first supporting plane, and the elongated bending sheet is arrangeable between a first and a second component which are movable with respect to each other such that the first pair of bearings abuts at the first component and the second pair of bearings abuts at the second component so that a relative movement of the first and the second component with respect to each other causes a detectable deformation of the bending sheet.

In this second alternative, the first pair of bearings is formed by two first torus sections while the second pair of bearings is formed by two second torus sections. The respective sections are separate components such that the elongated bending sheet is not formed in one piece like the first alternative. Further, and while the bearings in the first alternative may extend parallel to the central transverse axis, the bearings in the second alternative are formed in a curved manner. Nevertheless, the different form and arrangement does not alter the general function of the second alternative. Thus, it is referred in the remaining and particularly with respect to the functioning, to the above explanations for the first alternative.

In a preferred embodiment of both alternatives of the elongated bending sheet, the elongated bending sheet is formed symmetrically along the central longitudinal axis and/or the central transverse axis. Such symmetrical design is preferred due to the resulting further facilitated manufacturing and mounting or assembly process as well as the facilitated handling for the worker as only the arrangement of the first pair of bearings adjacent to the first component is decisive but not a specific spatial orientation.

It is further preferred in both alternatives that the elongated bending sheet has a sensor, in particular a strain gauge, at or adjacent to a point of intersection of the central longitudinal axis and the central transverse axis. Further preferred, only one sensor is present. As a result, the sensor is arranged on the one hand in or adjacent to the center plane and on the other hand in or adjacent to the center of the elongated bending sheet. In or adjacent to the center of the elongated bending sheet, the deformation occurring during use is at a maximum so that the sensor can detect even smallest deformations and, thus, smallest relative movements of the first and the second component with respect to each other.

According to a further preferred embodiment of both alternatives of the elongated bending sheet, the second distance is in the range of 30 to 90% of the first distance. In particular this range has been proven to be advantageous, specifically when using only one sensor.

According to a further preferred embodiment of both alternatives of the elongated bending sheet, the central longitudinal axis extends centrally through the first and the second pair of bearings. Consequently, it is further preferred that the central transverse axis extends also centrally between the first and the second pair of bearings. In other words, the first and the second pair of bearings are arranged symmetrically with respect to the central longitudinal axis and/or the central transverse axis. Due to this arrangement, in particular in case both axes extend centrally between the first and the second pair of bearings, a very reliable detection of a relative movement between the first and the second component is ensured.

With respect to the fastening between a suspension strut and a suspension strut bearing seat it is preferred for both alternatives of the elongated bending sheet to have at most one opening in the shape of an elongated hole. Through such an elongated hole, one of the bolts for fastening the suspension strut to the suspension strut seat may extend such that the elongated bending sheet is mounted in a loss-proof manner between suspension strut and suspension strut bearing seat.

For the first alternative of the elongated bending sheet, it is further preferred that the elongated bending sheet has a generally curved shaped connecting the first and the second supporting plane with each other. This applies in particular to adjacent bearings of the first and the second pair of bearings. In this way, no step is present in the one piece elongated bending sheet which further supports the reliable function of the elongated bending sheet.

Consequently, it is also preferred that the first alternative of the elongated bending sheet has a component of thickness which is generally uniformly. In particular the portions having the integral bearings do not have a greater component thickness compared to the remaining portions. Due to this feature, the elongated bending sheet can be produced in a material saving way and has a low weight compared to arrangements in which the bearings increase the overall component thickness.

It is further preferred that the first and/or the second pair of bearings is impressed into the elongated bending sheet. This further stresses that the component thickness of the elongated bending sheet is generally uniformly and facilitates further the manufacturing of the elongated bending sheet.

Regarding the second alternative of the elongated bending sheet, it is preferred that the first pair of bearings is formed by the complete first torus and/or the second pair of bearings is formed by the complete second torus. Such an arrangement increases the abutment area of the bending sheet at the first and the second component so that a relative movement between the first and the second component is transmitted to the bending sheet in a reliable manner.

With respect to the second alternative of the elongated bending sheet, it is further preferred that the first and the second pair of bearings are connected firmly or rigidly to the elongated bending sheet by means of welding, gluing or the like. Thus, a reliable connection between the separate components is achieved.

An inventive vehicle, preferably a land vehicle or an air vehicle or aircraft comprises one alternative of the inventive elongated bending sheet for determining the mechanical vehicle load. As the resulting vehicle comprises at least one alternative of the inventive elongated bending sheet, the above-mentioned technical effects and advantages can be achieved. Accordingly, and for avoiding repetitions, it is referred to the above explanations.

In a preferred embodiment of the vehicle, the first component is part of a vehicle body, in particular a suspension strut bearing seat, and the second component is part of a running gear, in particular a suspension strut. Besides other locations and as explained above, this location is particularly preferred for arranging or mounting the elongated bending sheet due to the relatively easy accessibility. Further preferred, and as also discussion with respect to the elongated bending sheet, the vehicle is a car or a truck.

According to a further preferred alternative of the vehicle, at or adjacent to every connection between vehicle body and running gear a respective bending sheet is provided. In particular by providing each connection point or location between vehicle body and running gear with an elongated bending sheet, the vehicle load and, thus, the remaining vehicle load capacity, can be detected in a precise manner.

An inventive method for determining a mechanical vehicle load, in particular a remaining vehicle load capacity, using an inventive elongated bending sheet and at least one sensor, in particular a strain gauge, comprising the steps: determining a signal of the sensor corresponding to a deformation of the elongated bending sheet depending on the mechanical vehicle load, in particular the remaining vehicle load capacity, determining the mechanical vehicle load, in particular the remaining vehicle load capacity, based on the determined signal, in particular by means of a respective table or the like. In the inventive method, an inventive elongated bending sheet is used for determining the remaining vehicle load capacity. Concerning the technical effects and advantages, it is referred to the above explanations.

An inventive method for manufacturing a first alternative of an elongated bending sheet, comprises the steps: separating a sheet portion from a metal sheet, in particular by means of punching, processing the sheet portion, in particular by deep drawing, rolling or bending, such that the sheet portion comprises the features of the first alternative of the inventive elongated bending sheet. By means of this manufacturing method, the first alternative of the inventive bending sheet is produced. Consequently, and regarding the further features, technical effects, and advantages, it is referred to the discussion of the first inventive alternative of the elongated bending sheet.

An inventive method for manufacturing a second alternative of an elongated bending sheet comprises the steps: providing a bending sheet, providing two torus sections of a first torus or a complete first torus, providing two torus sections of a second torus or a complete second torus, fastening the two torus sections of the first torus or the first torus at the bending sheet, and fastening the two torus sections of the second torus or the second torus at the bending sheet. With this manufacturing method, the second alternative of the inventive bending sheet is produced. Accordingly, and regarding the further features, technical effects, and advantages, it is referred to the discussion of the second inventive alternative of the elongated bending sheet.

### 4. Brief description of the drawings

In the following, the present invention will be described in detail based on the drawings. In the drawings, the same reference signs denote the same elements and/or components. It shows:
- figure 1: a perspective view of a first embodiment of an inventive elongated bending sheet,
- figure 2: a cross-sectional view of the first embodiment of the elongated bending sheet according to figure 1,
- figure 3: a schematic exploded side view in cross-section of the first embodiment of the elongated bending sheet according to figure 1,
- figure 4: a schematic view of the first embodiment of the elongated bending sheet for illustrating the bending moment and the transverse force occurring during use of the bending sheet,
- figure 5: a perspective view of a second embodiment of an inventive elongated bending sheet,
- figure 6: a first perspective view of a third embodiment of an inventive elongated bending sheet,
- figure 7: a second perspective view of the third embodiment of the elongated bending sheet according to figure 6,
- figure 8: a cross-sectional view of the third embodiment of the elongated bending sheet according to figure 6,
- figure 9: a cross-sectional view of the third embodiment of the elongated bending sheet in an assembled state,
- figure 10: a perspective view of a fourth embodiment of an inventive elongated bending sheet,
- figure 11: a perspective view of the fourth embodiment of the elongated bending sheet in a pre-assembled state,
- figure 12: a flowchart of an embodiment of an inventive method for determining a mechanical vehicle load,
- figure 13: a flowchart of an embodiment of an inventive method for manufacturing a first alternative of an elongated bending sheet,
- figure 14: a flowchart of an embodiment of an inventive method for manufacturing a second alternative of an elongated bending sheet.

### 5. Detailed description of preferred embodiments

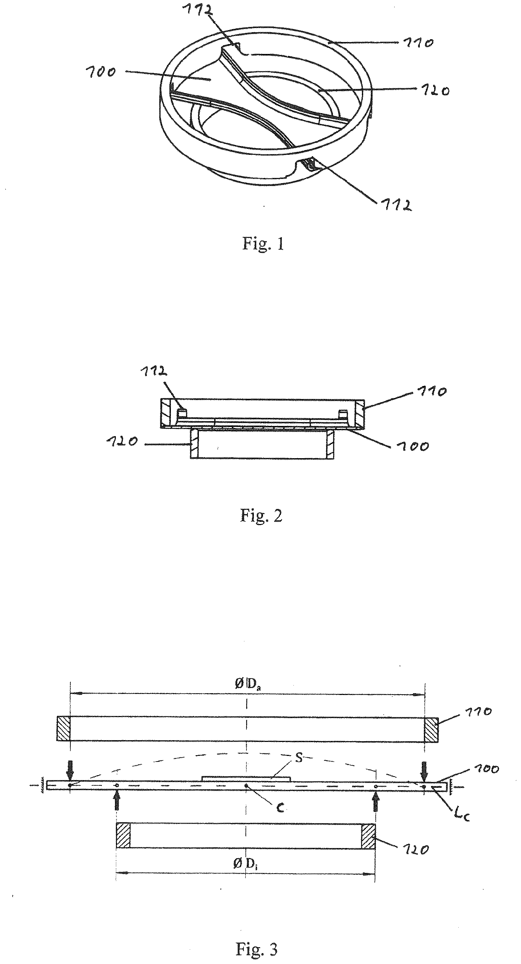

In the following and with respect to figures 1 to 4 a first embodiment of an inventive elongated bending sheet 100 is discussed and explained.

The elongated bending sheet 100 has a larger extension along a central longitudinal axis Lc compared to a central transverse axis T_{C} extending transverse to the central longitudinal axis L_{C}. To this end, the central longitudinal axis L_{C} for this embodiment is indicated in figure 3. A point of intersection of the central longitudinal axis Lc and the central transverse axis Tc preferably defines a center C of the elongated bending sheet 100, preferably a geometric center. Accordingly, and again with respect to figure 3, the central transverse axis Tc extends from the center C perpendicular to the drawing plane. The plane generated by the central longitudinal axis Lc and the central transverse axis T_{C} is denoted as central plane C_{P}. Further, and in the present example of figure 1, the elongated bending sheet is U-shaped when viewed in cross-section along the central transverse axis T_{C}.

A sensor S such as a strain gauge is arranged at or adjacent to the center C.

A first torus 110 and a second torus 120 are rigidly mounted or connected to the elongated bending sheet 100 by means of welding, gluing or the like. The first torus 110 is in direct contact with the elongated bending sheet 100 at two torus sections 114. These two torus sections 114 form a first pair of bearings of the elongated bending sheet 100 for abutment at a first component 1. In the present example, two recesses 112 are present at both sides of each torus section 114 of the first torus 110 due to the general U shape of the elongated bending sheet 100.

The two torus sections 114 of the first torus 110 are arranged on a first side of the elongated bending sheet 100 and have a first distance along the central longitudinal axis Lc with respect to each other. With respect to figure 3, the first torus 110 is arranged on a first side of the central plane C_{P}.

Due to the torus design, the respective first distance corresponds to a first diameter Dₐ of the first torus 110. Further, the two torus sections 114 as well as the complete first torus 110 generate a first supporting plane. As the side of the first torus 110 facing away from the elongated bending sheet 100 abuts in use at the first component 1, this side is used for determining the first supporting plane.

Likewise, two torus sections of the second torus 120 are in direct contact with the elongated bending sheet 100 and are arranged on an opposite second side of the elongated bending sheet 100. Thus, the two torus sections of the second torus 120 form a second pair of bearings. Preferably, and with respect to figure 3, these second pair of bearings is arranged on a second side of the central plane C_{P} opposite to the first side.

The second torus 120 has a second diameter Dᵢ, defining a second distance between the two torus sections of the second torus 120 in direct contact with the elongated bending sheet 100 along the central longitudinal axis Lc. Further, the two torus sections as well as the complete second torus 120 generate a second supporting plane. As the side of the second torus 120 facing away from the elongated bending sheet 100 abuts in use at the second component 3, this side is used for determining the second supporting plane.

Preferably, all three planes, i.e., the central plane C_{P}, the first supporting plane and the second supporting plane are arranged parallel to each other in an initial or unloaded state of the elongated bending sheet 100.

The second diameter Dᵢ is smaller than the first diameter Dₐ. Consequently, the distance along the central longitudinal axis Lc between a bearing of the first pair of bearings and an adjacent bearing of the second pair of bearings defines a lever arm.

As can be seen in figures 1 and 2, the elongated bending sheet 100 is formed symmetrically along the central longitudinal axis Lc and the central transverse axis Tc. Further, it is preferred that the second distance and, thus, the second diameter Dᵢ is in the range of 30 to 90% of the first distance and, thus, of the first diameter Dₐ.

The central longitudinal axis Lc extends centrally through the first and the second pair of bearings, i.e., through the two tours sections 114 of the first torus 110 and the two torus sections of the second torus 120 in direct abutment with the elongated bending sheet 100. In the same manner, the central transverse axis T_{C} extends also centrally between the two torus sections 114 of the first torus 110 and the two torus sections of the second torus 120 in direct abutment with the elongated bending sheet 100 and thus between the first and the second pair of bearings.

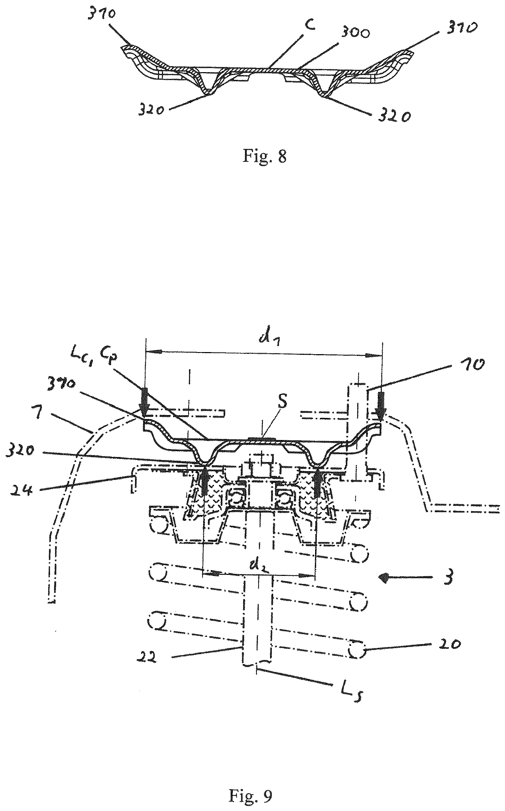

In use, the elongated bending sheet 100 having the first 110 and the second torus 120 is arranged in a vehicle, preferably a land vehicle, such as a car or truck, or an air vehicle or aircraft. In particular, the first component is part of a vehicle body, in particular a suspension strut bearing seat, and the second component is part of a running gear, in particular a suspension strut. In this regard, it is referred to the below discussion of figure 9, in which a third embodiment of an elongated bending sheet 300 is shown in a respectively installed state.

For the sake of completeness, the elongated bending sheet 100 is arranged between the first component 1 and the second component 3 for example by clamping. Additionally, the elongated bending sheet 100 may be arranged between the first 1 and the second component 3 in a loss-proof manner. This will also be explained below.

The first 1 and the second component 3 are movable with respect to each other. For an easier understanding, it is assumed that the relative movement occurs in a direction perpendicular to the central plane C_{P} of the elongated bending sheet 100. The reference sign L_{S} indicates the respective movement direction and corresponds to a longitudinal axis of the suspension strut as second component. For the sake of completeness, it is already pointed out that a deviation from a complete perpendicular movement is allowable. In this regard, it is preferred that a respective deviation is less than a spherical angle of 30°, preferably 20° and more preferably 10° with respect to an axis perpendicular to the central plane C_{P}.

In case of a relative movement of the first 1 and the second component 3 to each other, the distance therebetween is for example decreased. Such a decrease in the distance results in forces acting on the first 110 and second torus 120 and, thus, on the torus sections 114 of the first 110 and the second torus 120 in direct contact with the elongated bending sheet 100. Accordingly, such a relative movement causes a deformation of the elongated bending sheet 100 as it is illustrated in figure 3.

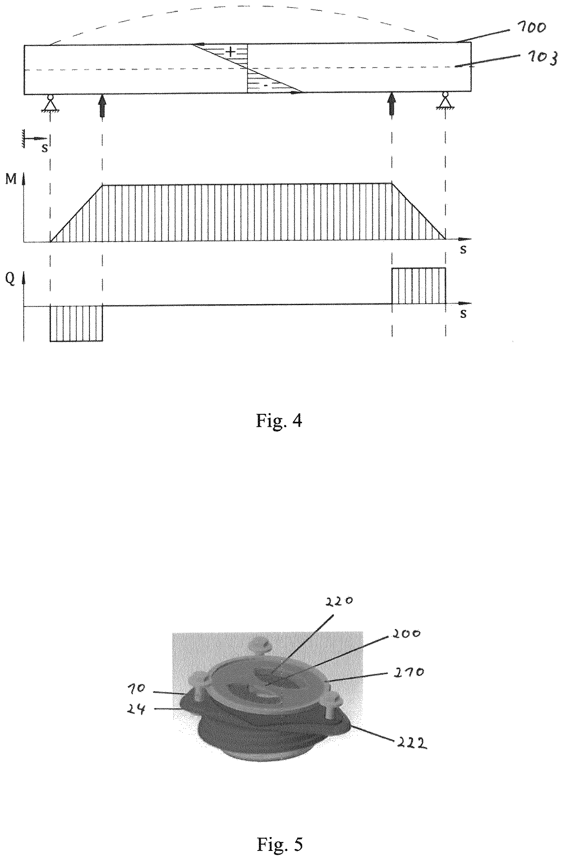

Figure 4 illustrates the elongated bending sheet 100 in a schematic manner for explaining the course of the deformation, in particular based on a bending moment M, and the forces acting on the elongated bending sheet 100 over the length of the bending sheet. To this end, the uppermost illustration of figure 4 shows a schematic elongated bending sheet 100 indicating a neutral fiber 103, a deformation based on the dashed line as well as a tension within the bending sheet 100 by the sign + and a compression within the bending sheet 100 by the sign -. In the intermediate illustration, a resulting bending moment M is indicated over a length s of the bending sheet 100. Consequently, the lowermost illustration indicates the course of a transverse force Q acting on the elongated bending sheet 100 over the length s of the elongated bending sheet 100.

Assuming a vehicle such as a car or truck, comprising such an elongated bending sheet 100 between the suspension strut bearing seat as first component 1 and the suspension strut as second component 3, the elongated bending sheet 100 shows in an initial or unladen state of the vehicle a first deformation. By means of this first deformation, the unladen state can be identified. In other words, the vehicle load capacity, i.e., the load which can be added to the vehicle until the maximum load or payload is reached, is completely available.

In case a load is added to this vehicle, a relative movement between the first 1 and the second component 3 occurs. In particular, the distance between the first 1 and the second component 3 is decreased. This results, in turn, in a further deformation of the elongated bending sheet 100. Such a further deformation is detected by the sensor S so that the respective signal can be used for identifying the weight of the additional load and, thus, for calculating the remaining vehicle load capacity.

Now referring to figure 5, as perspective view of a second embodiment of an inventive elongated bending sheet 200 is discussed. Like the first embodiment of the elongated bending sheet 100, the second embodiment of the elongated bending sheet 200 comprises a first torus 210 and a second torus 220. In this regard, it is referred to the above explanations for the first embodiment 100. In addition to the first embodiment 100, the second embodiment 200 comprises an opening 222 in the construction surrounding the second torus 220.

Further, figure 5 indicates a suspension strut top mount 24 having three bolts 10 for fastening the suspension strut as second component 3 to the vehicle body, in particular the suspension strut bearing seat, as first component 1. Due to the opening 222, the elongated bending sheet 200 is arranged or fastened between the first 1 and the second component 3 in a loss-proof manner. For allowing an easy assembly, the opening 222 has the shape of an elongated hole. The functioning of the elongated bending sheet 200 corresponds to the functioning of the first embodiment of the elongated bending sheet 100.

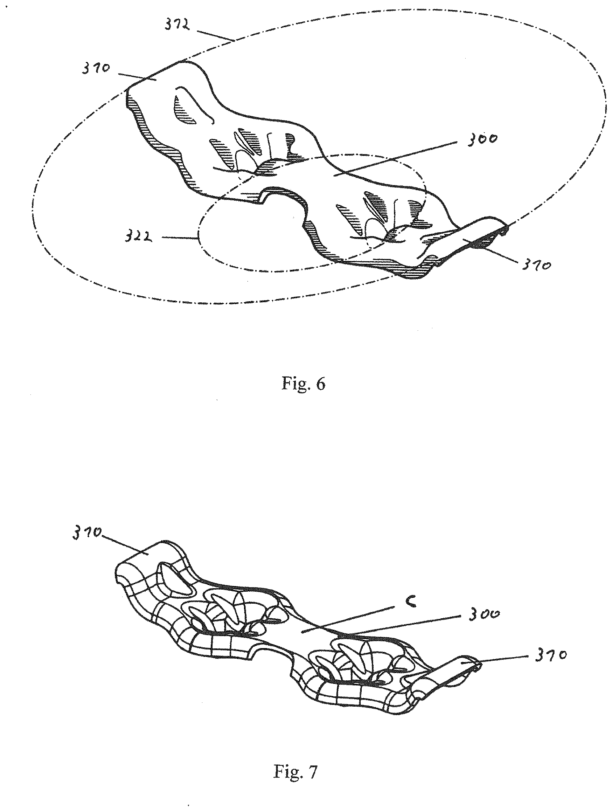

Next referring to figures 6 to 8, a third embodiment of an elongated bending sheet 300 is discussed.

In contrast to the first 100 and the second embodiment of an elongated bending sheet 200, the third embodiment of an elongated bending sheet 300 does not have bearings which are part of a torus. Nevertheless, the conceptional idea is based on the first 100 and the second embodiment 200. For indicating the respective conceptual similarity, a first imaginary circle 312 and a second imaginary circle 322 is indicated in the illustrations.

Like the first 100 and the second embodiment 200, the elongated bending sheet 300 has a larger extension along a central longitudinal axis Lc compared to a central transverse axis Tc extending transverse to the central longitudinal axis Lc. To this end, the central longitudinal axis Lc for this embodiment is indicated in figure 9. A point of intersection of the central longitudinal axis Lc and the central transverse axis T_{C} preferably defines a center C of the elongated bending sheet 300, preferably a geometric center. Accordingly, and again with respect to figure 9, the central transverse axis T_{C} extends from the center C perpendicular to the drawing plane. The plane generated by the central longitudinal axis Lc and the central transverse axis Tc is denoted in figure 9 as central plane C_{P}. Further, a sensor S such as a strain gauge is arranged at or adjacent to the center C (cf. figure 9).

The elongated bending sheet 300 has a first pair of bearings 310 having a first distance d₁ along the central longitudinal axis Lc with respect to each other, are arranged on a first side of the elongated bending sheet 300 and generate a first supporting plane. This first supporting plane can be concluded from the first imaginary circle 312.

The second pair of bearings 320 comprises two bearings having as second distance d₂ along the central longitudinal axis L_{C} with respect to each other which is smaller than the first distance d₁. The bearings of the second pair 320 are arranged on a second side of the elongated bending sheet 300 opposite to the first side and generate a second supporting plane different from the first supporting plane. This second supporting plane can be concluded from the second imaginary circle 322.

Assuming that the central plane C_{P} is arranged at the level of the middle portion or center C of the elongated bending sheet 300, the central plane C_{P} is arranged between the first and the second supporting plane (cf. also figure 9).

Regarding the symmetry of the elongated bending sheet 300 as well as the arrangement of the central longitudinal axis Lc and the central transverse axis Tc with respect to the first 310 and the second pair of bearings 320 it is referred to the respective explanations for the first 100 and the second embodiment of the elongated bending sheet 200. This applies also to the ratio of the second distance d₂ in view of the first distance d₁.

Contrary to the first and the second embodiment, the bearings of the first 310 and second pair of bearings 320 extend parallel to the central transverse axis Tc. Further, the elongated bending sheet 300 is formed in one piece with the first 310 and the second integral pair of bearings 320.

In particular, the first 310 and the second pair of bearings 320 are impressed into the elongated bending sheet 300. The component thickness of the elongated bending sheet 300 is further generally uniformly. Accordingly, a generally curved shape connecting the first and the second supporting plane with each other results when viewing the elongated bending sheet 300 in a side view (cf. figure 9).

For example, and starting from the left side in figure 9, the elongated bending sheet has a course which starts at the level of the first supporting plane, crosses the level of the central plane and arrives at the level of the second supporting plane. From here, it rises again to the central plane in the center C of the elongated bending sheet. In this portion, the sensor S is arranged. In the further course, the level of the elongated bending sheet 300 decreases from the central plane C_{P} to the second supporting plane, rises again and crosses the central plane C_{P} to arrive at the right side at the first supporting plane.

In use, the so formed elongated bending sheet 300 realizes the same technical effects as the elongated bending sheet according to the first 100 and second embodiment 200.

Figure 9 shows in this regard the elongated bending sheet 300 in an assembled state between the first 1 and the second component 3. The first component 1 is part of a vehicle body, in particular a suspension strut bearing seat. The second component 3 is part of a running gear, in particular a suspension strut comprising a spring 20 and a damper 22.

The elongated bending sheet 300 is clamped between the first 1 and the second component 3. This is performed such that a longitudinal axis Ls of the suspension strut extends preferably perpendicular to the central plane C_{P}.

As discussed above and when adding a load to the respective vehicle, a relative movement between the first 1 and the second component 3 occurs. In particular, the distance between both components 1, 3 is decreased. The resulting force acting on the elongated bending sheet 300 causes a deformation of the elongated bending sheet which can be measured by the sensor S arranged at or adjacent to the center C. The signal of the sensor S can thus be used for determining a mechanical vehicle load or, in other words, a remaining vehicle load capacity. The term remaining vehicle load capacity indicates the vehicle load which still can be added to the vehicle before reaching the allowed additional load.

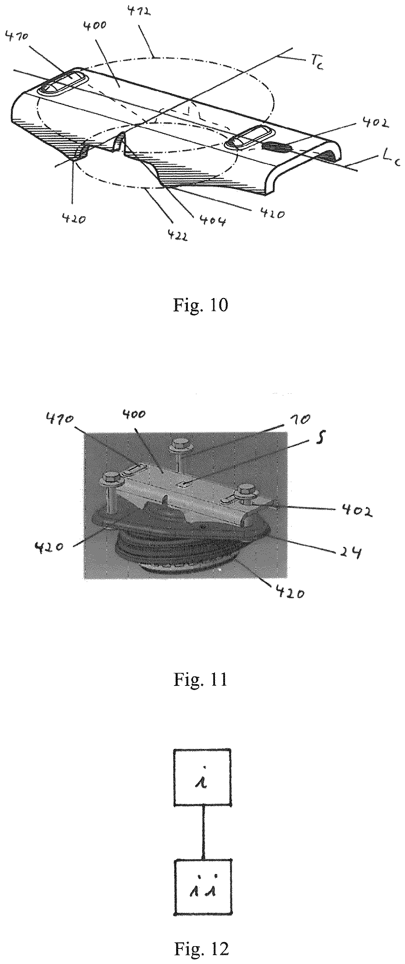

Now referring to figures 10 and 11, a fourth embodiment 400 of an elongated bending sheet 400 is discussed. This embodiment is similar to the third embodiment 300.

Here, the elongated bending sheet 400 has a generally inverted U-shape when viewed in cross-section along the central transverse axis Tc.

In the known manner, the first pair of bearings 410 is arranged on a first side and the second pair of bearings 420 is arranged on a second side of the elongated bending sheet 400. Contrary to the third embodiment 300, the second pair of bearings 420 is formed by four bearing points, two on each side with respect to the central longitudinal axis Lc. Thus, each pair of the second pair of bearings 420 is formed by two bearings.

Further, the elongated bending sheet 400 has an opening 402 through which a bolt 10 can extend in use which allows the elongated bending sheet 400 to be mounted in a loss proof manner between the first 1 and the second component 3. The respective embodiment is shown in figure 11.

For facilitating a deformation of the elongated bending sheet 400, a recess 404 is provided in the elongated bending sheet 400 at or adjacent to the central transverse axis Tc.

With respect to figure 12, an embodiment of a method for determining a mechanical vehicle load using one of the embodiments of the elongated bending sheet and at least one sensor S is explained. In a first step i, a signal of the sensor S corresponding to a deformation of the elongated bending sheet 100; 200; 300; 400 depending on the mechanical vehicle load, in particular the remaining vehicle load capacity, is determined. Next, the mechanical vehicle load is determined in step ii based on the determined signal. This is performed in particular by means of a respective table or the like.

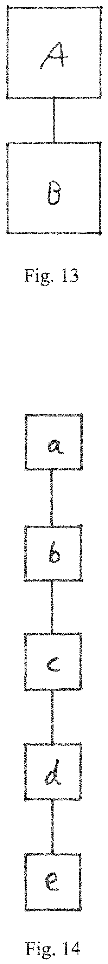

In figures 13 and 14, different alternatives for manufacturing an elongated bending sheet are shown.

A method for manufacturing a first alternative of an elongated bending sheet 300, 400 is shown in figure 13. In a first step A, a sheet portion is separated from a metal sheet, in particular by means of punching. Next, in step B, the sheet portion is processed, in particular by means of deep drawing, rolling or bending, such that the sheet portion comprises the features of the third or fourth embodiment of the elongated bending sheet 300; 400.

A method for manufacturing a second alternative of an elongated bending sheet 100; 200 has as first step a providing a bending sheet 100, 200 (cf. figure 14). In a second step b, two torus sections of a first torus 110, 210 or a complete first torus 110, 210 is provided, and in a third step c, two torus sections of a second torus 120, 220 or a complete second torus 120, 220 is provided. These three steps may occur in any order. Thus, they may be performed subsequently or at the same time.

As soon as all parts are provided, the two torus sections of the first torus 110, 210 or the first torus 110, 210 are fastened in step d at the elongated bending sheet 100, 200. In step e, the two torus sections of the second torus 120, 220 or the second torus 120, 220 is fastened at the bending sheet 100, 200. The steps d and e can be performed in any order.

### 6. List of reference signs

- 1: first component
- 3: second component

- 10: bolt
- 20: spring
- 22: damper
- 24: suspension strut top mount

- 100: first embodiment of an elongated bending sheet
- 103: neutral fiber
- 110: first torus
- 112: recess
- 114: torus section
- 120: second torus

- 200: second embodiment of an elongated bending sheet
- 210: first torus
- 220: second torus
- 222: opening

- 300: third embodiment of an elongated bending sheet
- 310: first pair of bearings
- 320: second pair of bearings

- 400: fourth embodiment of an elongated bending sheet
- 402: opening
- 404: recess
- 410: first pair of bearings
- 420: second pair of bearings

- C: center
- C_{P}: central plane
- Dₐ: first diameter
- Dᵢ: second diameter
- d₁: first distance
- d₂: second distance
- L_{c}: central longitudinal axis
- L_{S}: longitudinal axis of the suspension strut
- M: bending moment
- Q: transverse force
- S: sensor
- s: length
- T_{c}: central transverse axis
- +: tension
- -: compression

## Claims

1. An elongated bending sheet (300; 400) for determining a mechanical vehicle load, in particular a remaining vehicle load capacity, having a greater extension along a central longitudinal axis (Lc) compared to a central transverse axis (Tc) extending transverse to the central longitudinal axis (Lc), wherein the central longitudinal axis (Lc) and the central transverse axis (T_{C}) generate a central plane (C_{P}), wherein
a. the elongated bending sheet (300; 400) is formed in one piece with a first (310; 410) and a second integral pair of bearings (320; 420),
b. the bearings of the first pair (310; 410) have a first distance (d₁) along the central longitudinal axis (L_{C}) with respect to each other, are arranged on a first side of the elongated bending sheet (300; 400) and generate a first supporting plane,
c. the bearings of the second pair (320; 420) have a second distance (d₂) along the central longitudinal axis (L_{C}) with respect to each other which is smaller than the first distance (d₁), are arranged on a second side of the elongated bending sheet (300; 400) opposite to the first side and generate a second supporting plane different from the first supporting plane, and
d. the elongated bending sheet (300; 400) is arrangeable between a first (1) and a second component (3) which are movable with respect to each other such that the first pair of bearings (310; 410) abuts at the first component (1) and the second pair of bearings (320; 420) abuts at the second component (3) so that a relative movement of the first (1) and second component (3) with respect to each other causes a detectable deformation of the bending sheet (300; 400).

2. An elongated bending sheet (100; 200) for determining a mechanical vehicle load, in particular a remaining vehicle load capacity, having a larger extension along a central longitudinal axis (L_{C}) compared to a central transverse axis (T_{C}) extending transverse to the central longitudinal axis (Lc), wherein the central longitudinal axis (Lc) and the central transverse axis (T_{C}) generate a central plane (C_{P}), wherein
a. the elongated bending sheet (100; 200) is formed with a first and a second pair of bearings,
b. the bearings of the first pair are formed by two torus sections (114) of a first torus (110; 210) with a first diameter (Dₐ) having a first distance along the central longitudinal axis (L_{C}) with respect to each other, are arranged on a first side of the elongated bending sheet (100; 200) and generate a first supporting plane, and
c. the bearings of the second pair are formed by two torus sections of a second torus (120; 220) with a second diameter (Dᵢ) having a second distance along the central longitudinal axis (L_{C}) with respect to each other which is smaller than the first distance, are arranged on a second side of the elongated bending sheet (100; 200) opposite to the first side and generate a second supporting plane different from the first supporting plane, and
d. the elongated bending sheet (100; 200) is arrangeable between a first (1) and a second component (2) which are movable with respect to each other such that the first pair of bearings abuts at the first component (1) and the second pair of bearings abuts at the second component (3) so that a relative movement of the first (1) and the second component (3) with respect to each other causes a detectable deformation of the bending sheet (100; 200).

3. The elongated bending sheet (100; 200; 300; 400) according to one of the preceding claims, which is formed symmetrically along the central longitudinal axis (L_{C}) and/or the central transverse axis (T_{C}).

4. The elongated bending sheet (100; 200; 300; 400) according to one of the preceding claims, having a sensor (S), in particular a strain gauge, at or adjacent to a point of intersection of the central longitudinal axis (Lc) and the central transverse axis (Tc).

5. The elongated bending sheet (100; 200; 300; 400) according to claim 4, having only one sensor (S).

6. The elongated bending sheet (100; 200; 300; 400) according to one of the preceding claims, wherein the second distance (d₂) is in the range of 30 to 90 % of the first distance (d₁).

7. The elongated bending sheet (100; 200; 300; 400) according to one of the preceding claims, wherein the central longitudinal axis (L_{C}) extends centrally through the first (310; 410) and the second pair of bearings (320; 420).

8. The elongated bending sheet (100; 200; 300; 400) according to one of the preceding claims, wherein the central transverse axis (T_{C}) extends centrally between the first (310; 410) and the second pair of bearings (320; 420).

9. The elongated bending sheet (300; 400) according to one of the preceding claims in combination with claim 1, having at most one opening (222; 422) in the shape of an elongated hole.

10. The elongated bending sheet (300; 400) according to one of the preceding claims in combination with claim 1, having a generally curved shape connecting the first and the second support plane with each other.

11. The elongated bending sheet (300; 400) according to one of the preceding claims in combination with claim 1, the component thickness of which is generally uniformly.

12. The elongated bending sheet (300; 400) according to one of the preceding claims in combination with claim 1, wherein the first (310; 410) and/or the second pair of bearings (320; 420) is impressed into the elongated bending sheet (300; 400).

13. The elongated bending sheet (100; 200) according to one of the preceding claims in combination with claim 2, wherein the first pair of bearings is formed by the complete first torus (110; 210) and/or the second pair of bearings is formed by the complete second torus (120; 220).

14. The elongated bending sheet (100; 200) according to one of the preceding claims in combination with claim 2, wherein the first and the second pair of bearings are connected firmly to the elongated bending sheet (100; 200) by means of welding, gluing or the like.

15. A vehicle, preferably a land vehicle or an air vehicle or aircraft comprising an elongated bending sheet (100; 200; 300; 400) according to one of the claims 1 to 14.

16. The vehicle according to claim 15, wherein the first component (1) is part of a vehicle body, in particular a suspension strut bearing seat, and the second component (3) is part of a running gear, in particular a suspension strut.

17. The vehicle according to claim 15 or 16, wherein the vehicle is a car or a truck.

18. The vehicle according to claim 16 or 17, wherein at or adjacent to every connection between vehicle body and running gear a respective bending sheet (100; 200; 300; 400) is provided.

19. A method for determining a mechanical vehicle load, in particular a remaining vehicle load capacity, using an elongated bending sheet (100; 200; 300; 400) according to one of the claims 1 to 14 and at least one sensor (S), in particular a strain gauge, comprising the steps:
a. determining (i) a signal of the sensor (S) corresponding to a deformation of the elongated bending sheet (100; 200; 300; 400) depending on the mechanical vehicle load, in particular the remaining vehicle load capacity,
b. determining (ii) the mechanical vehicle load, in particular the remaining vehicle load capacity, based on the determined signal, in particular by means of a respective table or the like.

20. A method for manufacturing an elongated bending sheet (300; 400) according to claim 1, comprising the steps:
a. separating (A) a sheet portion from a metal sheet, in particular by means of punching,
b. processing (B) the sheet portion, in particular by deep drawing, rolling or bending, such that the sheet portion comprises the features of the elongated bending sheet (300; 400) according to claim 1.

21. A method for manufacturing an elongated bending sheet (100; 200) according to claim 2, comprising the steps:
a. providing (a) a bending sheet (100; 200),
b. providing (b) two torus sections (114) of a first torus (110; 210) or a complete first torus (110; 210),
c. providing (c) two torus sections of a second torus (120; 220) or a complete second torus (120; 220),
d. fastening (d) the two torus sections (114) of the first torus (110; 210) or the first torus (110; 210) at the bending sheet, and
e. fastening (e) the two torus sections of the second torus (120; 220) or the second torus (120; 220) at the bending sheet (100; 200).

## Patentansprüche

1. Ein längliches Biegeblech (300; 400) zum Bestimmen einer mechanischen Fahrzeugbelastung, insbesondere einer verbleibenden Fahrzeugbelastungskapazität, die entlang einer zentralen Längsachse (Lc) eine größere Ausdehnung aufweist im Vergleich zu einer zentralen Querachse (Tc), die sich quer zu der zentralen Längsachse (Lc) erstreckt, wobei die zentrale Längsachse (Lc) und die zentrale Querachse (T_{C}) eine zentrale Ebene (C_{P}) erzeugen, wobei
a. das längliche Biegeblech (300; 400) einstückig ausgebildet ist mit einem ersten (310; 410) und einem zweiten integralen Lagerpaar (320; 420),
b. die Lager des ersten Paars (310; 410) weisen zueinander einen ersten Abstand (d₁) entlang der zentralen Längsachse (Lc) auf, sind an einer ersten Seite des länglichen Biegeblechs (300; 400) angeordnet und erzeugen eine erste tragende Ebene,
c. die Lager des zweiten Paars (320; 420) weisen zueinander einen zweiten Abstand (d₂) entlang der zentralen Längsachse (Lc) auf, der kleiner ist als der erste Abstand (d₁), sind an einer zweiten Seite des länglichen Biegeblechs (300; 400) gegenüber der ersten Seite angeordnet und erzeugen eine zweite tragende Ebene, die sich von der ersten tragenden Ebene unterscheidet, und
d. das längliche Biegeblech (300; 400) ist anordenbar zwischen einem ersten (1) und einem zweiten Bauteil (3), die so zueinander bewegbar sind, dass das erste Lagerpaar (310; 410) an dem ersten Bauteil (310; 410) anliegt und das zweite Lagerpaar (320; 420) liegt an dem zweiten Bauteil (3) an, sodass eine Relativbewegung des ersten (1) und zweiten Bauteils (3) zueinander eine erkennbare Deformierung des Biegeblechs (300; 400) verursacht.

2. Ein längliches Biegeblech (100; 200) zum Bestimmen einer mechanischen Fahrzeugbelastung, insbesondere einer verbleibenden Fahrzeugbelastungskapazität, mit einer größeren Ausdehnung entlang einer zentralen Längsachse (Lc) im Vergleich zu einer zentralen Querachse (Tc), die sich quer zu der zentralen Längsachse (Lc) erstreckt, wobei die zentrale Längsachse (Lc) und die zentrale Querachse (T_{C}) eine zentrale Ebene (C_{P}) erzeugen, wobei
a. das längliche Biegeblech (100; 200) mit einem ersten und einem zweiten Lagerpaar ausgebildet ist,
b. die Lager des ersten Paars sind gebildet durch zwei Ringabschnitte (114) eines ersten Rings (110; 210) mit einem ersten Durchmesser (Dₐ), die entlang der zentralen Längsachse (Lc) einen ersten Abstand zueinander aufweisen, sind an einer ersten Seite des länglichen Biegeblechs (100; 200) angeordnet und erzeugen eine erste tragende Ebene, und
c. die Lager des zweiten Paars sind gebildet durch zwei Ringabschnitte (114) eines zweiten Rings (120; 220) mit einem zweiten Durchmesser (Dᵢ), die entlang der zentralen Längsachse (L_{C}) einen zweiten Abstand zueinander aufweisen, der kleiner ist als der erste Abstand, sind an einer zweiten Seite des länglichen Biegeblechs (100; 200) gegenüber der ersten Seite angeordnet und erzeugen eine zweite tragende Ebene, die sich von der ersten tragenden Ebene unterscheidet, und
d. das längliche Biegeblech (100; 200) ist anordenbar zwischen einem ersten (1) und einem zweiten Bauteil (2), die zueinander so bewegbar sind, dass das erste Lagerpaar an dem ersten Bauteil (1) anliegt und das zweite Lagerpaar liegt an dem zweiten Bauteil (3) an, sodass eine Relativbewegung des ersten (1) und des zweiten Bauteils (3) zueinander eine erkennbare Deformierung des Biegeblechs (100; 200) verursacht.

3. Das längliche Biegeblech (100; 200; 300; 400) gemäß einem der vorhergehenden Ansprüche, das symmetrisch entlang der zentralen Längsachse (Lc) und/oder der zentralen Querachse (Tc) gebildet ist.

4. Das längliche Biegeblech (100; 200; 300; 400) gemäß einem der vorhergehenden Ansprüche, das einen Sensor (S) aufweist, insbesondere einen Dehnungsmessstreifen, an oder benachbart zu einem Schnittpunkt der zentralen Längsachse (Lc) und der zentralen Querachse (Tc).

5. Das längliche Biegeblech (100; 200; 300; 400) gemäß Anspruch 4, das nur einen Sensor (S) aufweist.

6. Das längliche Biegeblech (100; 200; 300; 400) gemäß einem der vorhergehenden Ansprüche, wobei der zweite Abstand (d2) im Bereich von 30 bis 90 % des ersten Abstands (d1) liegt.

7. Das längliche Biegeblech (100; 200; 300; 400) gemäß einem der vorhergehenden Ansprüche, wobei sich die zentrale Längsachse (Lc) zentral durch das erste (310; 410) und das zweite Lagerpaar (320; 420) erstreckt.

8. Das längliche Biegeblech (100; 200; 300; 400) gemäß einem der vorhergehenden Ansprüche, wobei sich die zentrale Querachse (Tc) zentral zwischen dem ersten (310; 410) und dem zweiten Lagerpaar (320; 420) erstreckt.

9. Das längliche Biegeblech (300; 400) gemäß einem der vorhergehenden Ansprüche in Kombination mit Anspruch 1, das höchstens eine Öffnung (222; 422) in Form eines Langlochs aufweist.

10. Das längliche Biegeblech (300; 400) gemäß einem der vorhergehenden Ansprüche in Kombination mit Anspruch 1, das eine im Wesentlichen gebogene Form aufweist, die die erste und die zweite tragende Ebene miteinander verbindet.

11. Das längliche Biegeblech (300; 400) gemäß einem der vorhergehenden Ansprüche in Kombination mit Anspruch 1, wobei die Dicke des Bauteils im Wesentlichen gleichmäßig ist.

12. Das längliche Biegeblech (300; 400) gemäß einem der vorhergehenden Ansprüche in Kombination mit Anspruch 1, wobei das erste (310; 410) und/oder das zweite Lagerpaar (320; 420) in das längliche Biegeblech (300; 400) eingeprägt ist.

13. Das längliche Biegeblech (100; 200) gemäß einem der vorhergehenden Ansprüche in Kombination mit Anspruch 2, wobei das erste Lagerpaar durch den vollständigen ersten Ring (110; 210) gebildet ist und/oder das zweite Lagerpaar ist durch den vollständigen zweiten Ring (120; 220) gebildet.

14. Das längliche Biegeblech (100; 200) gemäß einem der vorhergehenden Ansprüche in Kombination mit Anspruch 2, wobei das erste und das zweite Lagerpaar mit dem länglichen Biegeblech (100; 200) mittels Schweißen, Verkleben oder dergleichen fest verbunden sind.

15. Ein Fahrzeug, vorzugsweise ein Landfahrzeug oder ein Luftfahrzeug oder Flugzeug umfassend ein längliches Biegeblech (100; 200; 300; 400) gemäß einem der Ansprüche 1 bis 14.

16. Das Fahrzeug gemäß Anspruch 15, wobei das erste Bauteil (1) Teil eines Fahrzeugkörpers ist, insbesondere eine Federbeinstützaufnahme, und das zweite Bauteil (3) ist Teil eines Fahrwerks, insbesondere ein Federbein.

17. Das Fahrzeug gemäß Anspruch 15 oder 16, wobei das Fahrzeug ein Auto oder ein LKW ist.

18. Das Fahrzeug gemäß Anspruch 16 oder 17, wobei an oder angrenzend an jede Verbindung zwischen Fahrzeugkörper und Fahrwerk ein entsprechendes Biegeblech (100; 200; 300; 400) bereitgestellt ist.

19. Ein Verfahren zum Bestimmen einer mechanischen Fahrzeugbelastung, insbesondere einer verbleibenden Fahrzeugbelastungskapazität, unter Verwendung eines länglichen Biegeblechs (100; 200; 300; 400) gemäß einem der Ansprüche 1 bis 14 und mindestens eines Sensors (S), insbesondere ein Dehnungsmessstreifen, umfassend die Schritte:
a. Bestimmen (i) eines Signals des Sensors (S) entsprechend einer Deformierung des länglichen Biegeblechs (100; 200; 300; 400) abhängig von der mechanischen Fahrzeugbelastung, insbesondere der verbleibenden Fahrzeugbelastungskapazität,
b. Bestimmen (ii) der mechanischen Fahrzeugbelastung, insbesondere der verbleibenden Fahrzeugbelastungskapazität, basierend auf dem bestimmten Signal, insbesondere mittels einer entsprechenden Tabelle oder dergleichen.

20. Ein Verfahren zum Herstellen eines länglichen Biegeblechs (300; 400) gemäß Anspruch 1, umfassend die Schritte:
a. Trennen (A) eines Blechbereichs von einem Metallblech, insbesondere mittels Stanzen,
b. Verarbeiten (B) des Blechbereichs, insbesondere durch Tiefziehen, Walzen oder Biegen, sodass der Blechbereich die Merkmale des länglichen Biegeblechs (300; 400) gemäß Anspruch 1 umfasst.

21. Ein Verfahren zum Herstellen eines länglichen Biegeblechs (100; 200) gemäß Anspruch 2, umfassend die Schritte:
a. Bereitstellen (a) eines Biegeblechs (100; 200),
b. Bereitstellen (b) von zwei Ringabschnitten (114) eines ersten Rings (110; 210) oder eines vollständigen ersten Rings (110; 210),
c. Bereitstellen (c) von zwei Ringabschnitten eines zweiten Rings (120; 220) oder eines vollständigen zweiten Rings (120; 220),
d. Befestigen (d) der zwei Ringabschnitte (114) des ersten Rings (110; 210) oder des ersten Rings (110; 210) an dem Biegeblech, und
e. Befestigen (e) der zwei Ringabschnitte des zweiten Rings (120; 220) oder des zweiten Rings (120; 220) an dem Biegeblech (100; 200).

## Revendications

1. Tôle de flexion (300 ; 400) allongée permettant de déterminer une charge mécanique de véhicule, en particulier une capacité de charge restante de véhicule, ayant une extension supérieure le long d'un axe longitudinal central (Lc) par rapport à un axe transversal central (Tc) s'étendant transversalement à l'axe longitudinal central (Lc), dans laquelle l'axe longitudinal central (Lc) et l'axe transversal central (T_{C}) génèrent un plan central (C_{P}), dans laquelle
a. la tôle de flexion (300 ; 400) allongée est formée d'un seul tenant avec une première (310 ; 410) et une seconde paire intégrée de paliers (320 ; 420),
b. les paliers de la première paire (310 ; 410) ont une première distance (d₁) le long de l'axe longitudinal central (Lc) l'un par rapport à l'autre, sont agencés sur un premier côté de la tôle de flexion (300 ; 400) allongée et génèrent un premier plan de support,
c. les paliers de la seconde paire (320 ; 420) ont une seconde distance (d₂) le long de l'axe longitudinal central (Lc) l'un par rapport à l'autre, qui est plus petite que la première distance (d₁), sont agencés sur un second côté de la tôle de flexion (300 ; 400) allongée, opposé au premier côté, et génèrent un second plan de support différent du premier plan de support et
d. la tôle de flexion (300 ; 400) allongée peut être agencée entre un premier (1) et un second composant (3) qui sont mobiles l'un par rapport à l'autre, de sorte que la première paire de paliers (310 ; 410) bute au niveau du premier composant (1) et que la seconde paire de paliers (320 ; 420) bute au niveau du second composant (3), de sorte qu'un mouvement réciproque du premier (1) et du second composant (3) l'un par rapport à l'autre provoque une déformation détectable de la tôle de flexion (300 ; 400).

2. Tôle de flexion (100 ; 200) allongée permettant de déterminer une charge mécanique de véhicule, en particulier une capacité de charge restante de véhicule, ayant une extension supérieure le long d'un axe longitudinal central (Lc) par rapport à un axe transversal central (Tc) s'étendant transversalement à l'axe longitudinal central (Lc), dans laquelle l'axe longitudinal central (Lc) et l'axe transversal central (T_{C}) génèrent un plan central (C_{P}), dans laquelle
a. la tôle de flexion (100 ; 200) allongée est constituée d'une première et d'une seconde paire de paliers,
b. les paliers de la première paire sont formés par deux sections de tore (114) d'un premier tore (110 ; 210) avec un premier diamètre (Dₐ) ayant une première distance le long de l'axe longitudinal central (Lc) l'un par rapport à l'autre, sont agencés sur un premier côté de la tôle de flexion (100 ; 200) allongée et génèrent un premier plan de support, et
c. les paliers de la seconde paire sont formés par deux sections de tore (120 ; 220) avec un second diamètre (Di) ayant une seconde distance le long de l'axe longitudinal central (Lc) l'un par rapport à l'autre qui est inférieure à la première distance, sont agencés sur un second côté de la tôle de flexion (100 ; 200) allongée, opposé au premier côté, et génèrent un second plan de support différent du premier plan de support, et
d. la tôle de flexion (100 ; 200) allongée peut être agencée entre un premier (1) et un second composant (2) qui sont mobiles l'un par rapport à l'autre, de sorte que la première paire de paliers bute au niveau du premier composant (1) et que la seconde paire de paliers bute au niveau du second composant (3), de sorte qu'un mouvement réciproque du premier (1) et du second composant (3) l'un par rapport à l'autre provoque une déformation détectable de la tôle de flexion (100 ; 200).

3. Tôle de flexion (100 ; 200 ; 300 ; 400) allongée selon l'une des revendications précédentes, qui est formée symétriquement le long de l'axe longitudinal central (Lc) et/ou de l'axe transversal central (T_{C}).

4. Tôle de flexion (100 ; 200 ; 300 ; 400) allongée selon l'une des revendications précédentes, ayant un capteur (S), en particulier une jauge de contrainte, au niveau d'un point d'intersection de l'axe longitudinal central (Lc) et de l'axe transversal central (Tc) ou de manière adjacente à ceux-ci.

5. Tôle de flexion (100 ; 200 ; 300 ; 400) allongée selon la revendication 4, ayant un seul capteur (S).

6. Tôle de flexion (100 ; 200 ; 300 ; 400) allongée selon l'une des revendications précédentes, dans laquelle la seconde distance (d₂) est située dans la plage comprise entre 30 % et 90 % de la première distance (d₁).

7. Tôle de flexion (100 ; 200 ; 300 ; 400) allongée selon l'une des revendications précédentes, dans laquelle l'axe longitudinal central (Lc) s'étend centralement à travers la première (310 ; 410) et la seconde paire de paliers (320 ; 420).

8. Tôle de flexion (100 ; 200 ; 300 ; 400) allongée selon l'une des revendications précédentes, dans laquelle l'axe transversal central (Tc) s'étend centralement entre la première (310 ; 410) et la seconde paire de paliers (320 ; 420).

9. Tôle de flexion (300 ; 400) allongée selon l'une des revendications précédentes en combinaison avec la revendication 1, ayant au plus une ouverture (222 ; 422) sous la forme d'un trou allongé.

10. Tôle de flexion (300 ; 400) allongée selon l'une des revendications précédentes en combinaison avec la revendication 1, ayant une forme généralement incurvée reliant le premier et le second plan de support l'un à l'autre.

11. Tôle de flexion (300 ; 400) allongée selon l'une des revendications précédentes en combinaison avec la revendication 1, dont l'épaisseur des composants est généralement uniforme.

12. Tôle de flexion (300 ; 400) allongée selon l'une des revendications précédentes en combinaison avec la revendication 1, dans laquelle la première (310 ; 410) et/ou la seconde paire de paliers (320 ; 420) est imprimée dans la tôle de flexion (300 ; 400) allongée.

13. Tôle de flexion (100 ; 200) allongée selon l'une des revendications précédentes en combinaison avec la revendication 2, dans laquelle la première paire de paliers est formée par le premier tore complet (110 ; 210) et/ou la seconde paire de paliers est formée par le second tore complet (120 ; 220).

14. Tôle de flexion (100 ; 200) allongée selon l'une des revendications précédentes en combinaison avec la revendication 2, dans laquelle la première et la seconde paire de paliers sont reliées fermement à la tôle de flexion (100 ; 200) allongée au moyen d'une soudure, d'un collage ou analogue.

15. Véhicule, de préférence véhicule terrestre ou véhicule aérien ou aéronef, comportant une tôle de flexion (100 ; 200 ; 300 ; 400) allongée selon l'une des revendications 1 à 14.

16. Véhicule selon la revendication 15, dans lequel le premier composant (1) fait partie d'une carrosserie de véhicule, en particulier un siège de palier de jambe de suspension, et le second composant (3) fait partie d'un train de roues, en particulier une jambe de suspension.

17. Véhicule selon la revendication 15 ou 16, dans lequel le véhicule est une voiture ou un camion.

18. Véhicule selon la revendication 16 ou 17, dans lequel, au niveau de chaque liaison entre la carrosserie de véhicule et le train de roues ou de manière adjacente à celle-ci, une tôle de flexion (100 ; 200 ; 300 ; 400) respective est fournie.

19. Procédé de détermination d'une charge mécanique de véhicule, en particulier d'une capacité de charge restante de véhicule, utilisant une tôle de flexion (100 ; 200 ; 300 ; 400) allongée selon l'une des revendications 1 à 14 et au moins un capteur (S), en particulier une jauge de contrainte, comportant les étapes de :
a. détermination (i) d'un signal du capteur (S) correspondant à une déformation de la tôle de flexion (100 ; 200 ; 300 ; 400) allongée selon la charge mécanique de véhicule, en particulier la capacité de charge restante de véhicule,
b. détermination (ii) de la charge mécanique de véhicule, en particulier de la capacité de charge restante de véhicule, sur la base du signal déterminé, en particulier au moyen d'une table respective ou analogue.

20. Procédé de fabrication d'une tôle de flexion (300 ; 400) allongée selon la revendication 1, comportant les étapes de :
a. séparation (A) d'une portion de tôle à partir d'une tôle métallique, en particulier au moyen d'un poinçonnage,
b. traitement (B) de la portion de tôle, en particulier par emboutissage, roulage ou flexion, de sorte que la portion de tôle comporte les caractéristiques d'une tôle de flexion (300 ; 400) allongée selon la revendication 1.

21. Procédé de fabrication d'une tôle de flexion (100 ; 200) allongée selon la revendication 2, comportant les étapes de :
a. fourniture (a) d'une tôle de flexion (100 ; 200),
b. fourniture (b) de deux sections de tore (114) d'un premier tore (110 ; 210) ou d'un premier tore complet (110 ; 210),
c. fourniture (c) de deux sections de tore d'un second tore (120 ; 220) ou d'un second tore complet (120 ; 220),
d. serrage (d) des deux sections de tore (114) du premier tore (110 ; 210) ou du premier tore (110 ; 210) au niveau de la tôle de flexion et
e. serrage (e) des deux sections de tore du second tore (120 ; 220) ou du second tore (120 ; 220) au niveau de la tôle de flexion (100 ; 200).
